# EUROPÄISCHE PATENTSCHRIFT

(11) **EP 2 259 401 B1**
(45) Veröffentlichungstag und Bekanntmachung des Hinweises auf die Patenterteilung: **26.09.2012**
(21) Anmeldenummer: 10002352.2
(22) Anmeldetag: 08.03.2010
(51) Int. Cl.: H02G 15/22, H02B 1/30, H02G 15/06

(54) **Kabelendverschluss für Freiluft- oder Innenraumanwendung**
Cable end closure for open air or indoor use
Fermeture d'extrémité de câble pour application de plein air ou en intérieur

(30) Priorität: 06.06.2009 DE 102009024109; 13.02.2010 DE 102010007868
(43) Veröffentlichungstag der Anmeldung: 08.12.2010
(73) Patentinhaber: NKT Cables GmbH, 51063 Köln (DE)
(72) Erfinder: Amerpohl, Uwe, 51467 Bergisch Gladbach (DE); Belz, Wolfgang, 50829 Köln (DE); Bongarten, Marcel, 53797 Lohmar (DE); Rossbach, Karl, 53547 Rossbach (DE); Zumdich, Heinrich, 50354 Hürth (DE)

(56) Entgegenhaltungen:
- EP-A1- 1 091 466
- DE-A1- 3 641 573
- US-A- 5 389 734

## Beschreibung

Die Erfindung betrifft einen Kabelendverschluss, insbesondere für Freiluftanwendung, vorzugsweise einen Freiluftendverschluss für Hochspannung. Der Gegenstand gehört zu Endverschlüssen mit Stützerfunktion, bei denen Öle (Silikonöle, Polyisobutylen) oder andere fluide Füllungen als Isoliermaterial verwendet werden. Ein auf Silikonbasis gefüllter Isolierkörper eines Kabelendverschlusses ist beispielsweise in der DE 34 20 500 A1 beschrieben.

Es sind Endverschlüsse bekannt, bei denen ein mechanisch stabil ausgebildeter lsolierkörper die auf den Endverschluss wirkenden Kräfte (Zuglasten und Biegekräfte vom Freileiterseil, Gewicht des eingeführten Kabels) aufnimmt. Solche Isolierkörper können aus Porzellan oder aus faserverstärkten Kunststoffen hergestellt sein. Wesentlich bei Kabelendverschlüssen mit selbsttragender Struktur ist, dass Querkräfte am Kopfendes des Kabelendverschlusses vollständig abgefangen werden.

Es wird bei durch inneren Lichtbogen ausgelösten Störfällen beobachtet, dass durch den plötzlich entstehenden hohen Innendruck Zerstörungen am Kabelendverschluss auftreten. Die Zerstörungen führen zum Austreten des fluiden lsolationsmediums, und zum Zerbrechen oder Zersplittern des Kabelendverschlusses, so dass Teile des Endverschlusses weggeschleudert werden. Das Austreten von Isolationsmedium kann zu Umweltschäden führen; welche möglicherweise dadurch vermeidbar sind, dass geeignete Auffangbehältnisse unterhalb des Endverschlusses angebracht werden. Allerdings stellen herumfliegende Teile des Endverschlusses, insbesondere durch Ablösen der Kopfarmatur vom Isolator eine Gefahrenquelle dar, insbesondere für sich in der Nähe aufhaltende Personen dar.

Für gasgefüllte Kabel-Garnituren sind Sicherungsmittel bei Auftreten eines durch einen Lichtbogenstörfall ausgelösten Überdrucks bekannt.

Mit solchen Sicherungsmitteln ist aus der DE 2743057 C2 eine Fußarmatur zu entnehmen, an dem ein gasisoliertes Kabel in einen Isolator herausgeführt wird. Die DE 3641573 A1 zeigt eine Druckentlastungseinrichtung mittels Tellerventil, ebenfalls eines mit Isoliergas gefüllten Gehäuses, in dem elektrische Schalter angeordnet sind. Teile der Druckentlastungseinrichtung können bei starkem Druckanstieg verformt werden, so dass nicht ausgeschlossen ist, dass neben der Verformung auch Teile abgelöst werden und wegfliegen. Ein anderes gasgefülltes Endverschluss-Gehäuse ist aus der DE 69212536 T2 zu entnehmen. Zur Entlastung eines Überdrucks sind eine Reißscheibe und ein Auffanggitter vorgesehen.

Das gemeinsame dieser Garnitur-Anordnungen mit Gasfüllung ist, dass jeweils relativ kleine Druckentlastungsöffnungen vorhanden sind, die seitlich angebracht sind.

Eigene Untersuchungen haben gezeigt, dass kleinflächige Öffnungen als Druckentlastungsöffnungen in mit Isolierfluid gefüllten Kabelendverschlüssen bei Lichtbogen-Störfällen nicht ausreichen. In solchen Kabelendverschlüssen liegen bei explosionsartiger Ausbildung eines Druckanstiegs andere physikalische Umstände vor als in gasgefüllten Endverschlüssen, insbesondere unterscheidet sich das hydrodynamische Verhalten stark je nach Füllmedium.

Es ist die Aufgabe der Erfindung, möglichst großflächige Druckentlastungsöffnungen und Sicherungsmittel bei einem mit Isolierfluid gefüllten Endverschluss anzugeben, so dass dieser gegen explosionsartig auftretenden Innendruck gesichert ist, und dass bei dem entstehenden Innendruck keine Teile unkontrolliert wegfliegen.

Die Lösung der Aufgabe wird im Kennzeichen des Hauptanspruchs formuliert. Weiterführenden Ausgestaltungen sind in den Unteransprüchen angegeben.

Der Kern der Erfindung ist ein Kabelendverschluss, der mindestens umfasst eine Fußarmatur zur Aufständerung auf einer Unterlage, eine Kopfarmatur mit Mitteln zur Ankopplung an ein Leiterseil, und ein Isoliergehäuse zur Aufnahme eines fluiden Isolationsmediums, vorzugsweise ein Isolier-Öl. Das Isoliergehäuse ist ein rotationssymmetrischer Hohlkörper aus glasfaserverstärktem Kunststoff und ist auf der Außenfläche mit Isolierrippen versehenen. Das Isoliergehäuse ist am unteren Ende (zur Fußplatte) und am oberen Ende (zur Kopfplatte) mit je einem in den Hohlkörper integrierten Metallring befestigt. Das Isoliergehäuse steht senkrecht auf der waagerecht liegenden Fußplatte.

An dem Kabelendverschluss ist mindestens eine mit Verschlussmitteln verschließbare Druckentlastungsöffnung für das Isolationsmedium ausgebildet, wobei die Verschlussmittel ein Öffnen der mindestens einen Druckentlastungsöffnung bei Überschreiten eines vorbestimmbaren Innendrucks gestatten. Es sind Sicherungsmittel vorhanden, die Mittel darstellen, um ausschließlich Isolationsmedium bei erhöhtem inneren Überdruck - ausgelöst durch einen Störfall, insbesondere durch einen Störlichtbogen - austreten zu lassen. Sicherungsmittel und Verschlussmittel wirken derart zusammen, dass sich bei Überschreiten eines vorbestimmbaren Innendrucks keine Teile des Kabelendverschlusses unkontrolliert ablösen und wegfliegen.

Versuchsreihen des Anmelders haben gezeigt, dass nur durch Gestaltung möglichst großflächiger, bzw. maximal möglichst großer Auslassöffnungen eine Zerstörung des Endverschlusses und unkontrolliertes Wegfliegen von Teilen des Endverschlusses vermieden werden können.

Bevorzugte und weiterführenden Ausgestaltungen der Erfindungen werden im Folgenden aufgeführt, wobei diese einzeln oder in Kombination miteinander beansprucht sein können.

Mindestens eine großflächige Druckentlastungsöffnung kann in der Fußarmatur oder in der Kopfarmatur oder in beiden Armaturen ausgebildet sein.

Die Druckentlastungsöffnungen sollen als ringsegmentförmige Öffnungen ausgebildet sein. Eine davon kann konzentrisch um eine in der Fußplatte ausgebildete Kabel-Einführöffnung und eine andere Öffnung kann in der Kopfplatte konzentrisch um eine Leiterdurchführung ausgebildet sein. Die Öffnungen werden mit mindestens zwei Stegen zwischen innerhalb der ringsegmentförmigen Öffnung und außerhalb der ringsegmentförmigen Öffnung liegendem Material der jeweiligen Platte überbrückt. Vorzugsweise kann die Öffnung in drei oder vier Segmente geteilt sein, so dass entweder drei oder vier Stege vorhanden sind.

Verschlussmittel und Sicherungsmittel der Druckentlastungsöffnung in der Fußplatte ist ein massiver Ring, der passend von unten und von außen in die Öffnung eingelegt ist und gesichert ist mit Befestigungsschrauben, die eine festgelegte Zugfestigkeit aufweisen müssen ('Abreißschrauben'). Die Druckentlastungsöffnung in der Fußplatte bleibt nach dem Wegsprengen des Rings offen. Der Ring kann in der Druckentlastungsöffnung mit einem Dichtungsmittel (Dichtungsring als O-Ring) abgedichtet sein.

Eine Abreißschraube für den Ring sollte durch einen Steg geführt sein, so dass man bei dem Vorhandensein von drei Stegen, drei Abreißschrauben einsetzen kann.

Als Verschlussmittel und Sicherungsmittel der Druckentlastungsöffnung in der Kopfarmatur ist eine, vorzugsweise metallisch ausgebildete Scheibe mit einheitlicher Dicke vorhanden, wobei in der Scheibe Bereiche geringerer Dicke ausgebildet sind. Die Scheibe stellt somit eine Berstscheibe dar.

Die Scheibe ist vorzugsweise als Ringscheibe ausgebildet und schließt die Öffnung von außen. Die Scheibe hat eine innere kreisförmige Öffnung, wobei am Innenrand und am Außenrand Befestigungslöcher vorhanden sind. Als Befestigungsmittel für die Ringscheibe in der Kopfarmatur sind zwei Ringe je mit Bohrungen passend zu den Befestigungslöchern der Scheibe eingesetzt.

Die Scheibe besteht vorzugsweise aus Edelstahl und die Bereiche geringerer Dicke sind linienförmig, vorzugsweise radial von innen nach außen verlaufend ausgebildet. Vorzugsweise bilden linienförmige Bereiche mit weiteren konzentrisch liegenden Linien geringerer Dicke mindestens eine lappenartige Fläche. Beim Aufreißen der Berstscheibe klappt die lappenartige Fläche auf, ohne dass Flächenelemente sich ablösen können.

Bei der Ausbildung und Gestaltung von Druckentlastungsöffnungen in der Kopfarmatur muss darauf geachtet werden, dass die Oberfläche der mit Druckentlastungsöffnungen versehenen Kopfarmatur frei ist von Taschen oder Vertiefungen, in denen sich Niederschlag oder Kondensat (Schnee, Regen) sammeln kann. Die Kopfarmatur liegt auf Potential des herausgeführten Leiters, so dass bei Ansammlung von Feuchtigkeit im Bereich der Kopfarmatur die Isolierfestigkeit reduziert ist. Es muss vermieden werden, dass bei Benetzung von Feuchtigkeit auf der Kopfarmatur Kriechstrecken entstehen. Diese besondere Problematik der Oberflächengestaltung liegt für Druckentlastungsöffnungen in der Fußarmatur nicht vor. In dem größeren der Befestigungsringe sind daher etwa horizontal liegende Drainagebohrungen zum Abtransport von Feuchtigkeit ausgebildet.

Die Erfindung ist in Ausführungsformen in Zeichnungen dargestellt, welche im Einzelnen zeigen:
Fig. 1: Schnittdarstellung eines Freiluftendverschlusses,
Fig. 2: Kopfarmatur des Freiluftendverschlusses (im Schnitt) und
Fig. 3: Aufsicht auf die Kopfarmatur von oben.

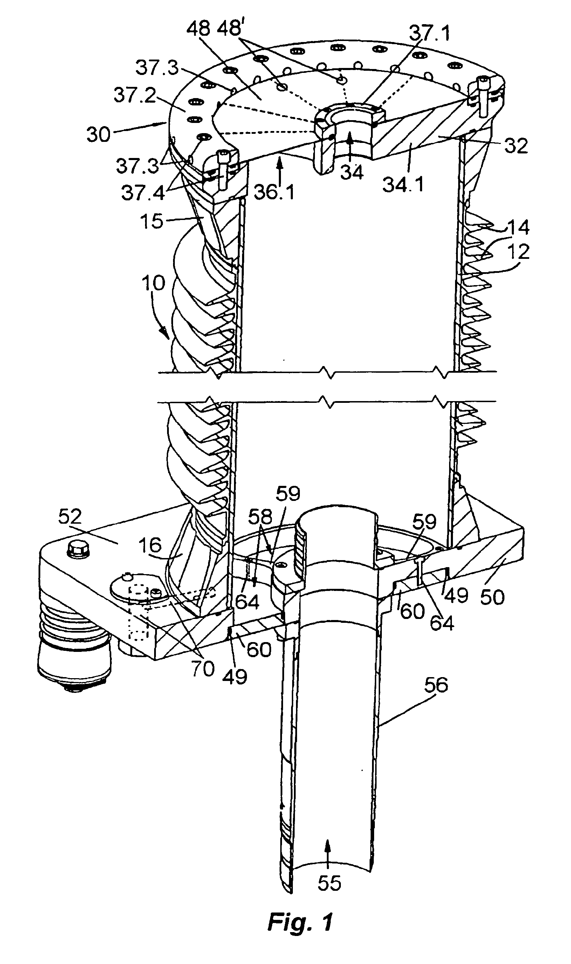

Die Fig. 1 zeigt eine Schnittdarstellung eines Freiluftendverschlusses für ein Hochspannungs-Energiekabel, beispielsweise kunststoffisoliert, mit einem zentralen Leiter. Auf einer - nicht dargestellten - Unterlage ist der Freiluftendverschluss 10 mit einer Fußarmatur 50 aufgeständert. Der Isolierkörper ist ein rotationssymmetrischer Hohlkörper 12 zur Aufnahme einer Isolationsflüssigkeit, wie beispielsweise Silikonöl. Der Hohlkörper 12 besteht aus glasfaserverstärktem Kunststoff und weist auf der Außenfläche Schirmrippen 14 auf. Der Hohlkörper ist am unteren Ende zur Fußplatte 52 und am oberen Ende zur Kopfplatte 32 mit je einem in den Hohlkörper integrierten metallischen Stützring 15,16 an der Fußplatte und an der Kopfplatte befestigt (über einen Flansch verschraubt). Ein Hochspannungskabel wird von unten durch den Kabel-Einführzylinder 56 in den Endverschluss eingeführt und mit Feldsteuerelemente am Übergang von Kabelisolierung zum Inneren des Endverschlusses abgesteuert. Das in der Regel konisch ausgebildete Abschlußende des Kabels wird mittels Spannmitteln kraft- und formschlüssig verpresst. Der Leiter des Kabels wird auf seiner ganzen Länge nach oben geführt und am oberen Ende durch eine Leiterdurchführung 34 in der Kopfplatte 32 nach außen zur Ankopplung, beispielsweise an ein Freileiterseil herausgeführt. In den Figuren ist ein Kabel mit seinem Leiter und seinen Feldsteuerelementen nicht dargestellt.

An dem Kabelendverschluss 10 sind zwei Druckentlastungsöffnungen 36.1, 58 vorhanden, die mit Verschlussmitteln 48, 60 verschließbar sind. In einem Störfall gestatten die Verschlussmittel 48, 60 ein Öffnen der Druckentlastungsöffnungen (36.1, 58) bei Überschreiten eines vorbestimmbaren Innendrucks. Es sind Sicherungsmittel (48, 60, 64) gegen ein Ablösen von Teilen des Endverschlusses im Falle eines massiven Störfalls vorhanden. Verschlussmittel und Sicherungsmittel wirken derart zusammen, dass es nicht zu einer Zerstörung, auch nicht in Teilen des Endverschlusses kommt, sondern nur zur Öffnung von Druckentlastungsöffnungen, wobei Isolationsmedium austreten kann.

Die Fig. 1 zeigt in der unteren Hälfte die Fußarmatur im Schnitt. Sie zeigt, dass die Druckentlastungsöffnung in der Fußplatte 52 als ringsegmentförmige Öffnung 58 ausgebildet ist. Die Öffnung 58 ist konzentrisch um eine in der Fußplatte 52 vorhandene Kabel-Einführöffnung 55 ausgebildet. Die Öffnung nimmt die maximal größte Fläche in der Fußplatte ein. Am Rand der Fußplatte 52 ist ein Belüftungs- bzw. Füllkanal 70 zu erkennen. Der Kanal ist abgewinkelt angelegt, so dass der Druckaufbau einen Verschluss nicht unmittelbar trifft.

Das Verschlussmittel der ringförmigen Öffnung 58 ist ein von unten und von außen auf der Öffnung liegender massiver Metallring 60. Er ist mit mindestens einer Abreißschraube 64 an der Fußplatte 52 befestigt. Die Abreißschrauben 64 für den Ring 58 sind jeweils durch einen Steg 59 geführt, der die Ringöffnung zwischen dem inneren und dem äußeren Material der Fußplatte überbrückt. Der Ring ist in der Druckentlastungsöffnung mit Dichtungsringen (O-Ring 62) abgedichtet. Nach einer explosionsartigen Druckerhöhung im Inneren (bei einem Störfall) zerreißen die Abreißschrauben und der Ring wird nach unten herausgedrückt. Die Abreißschrauben verbleiben in dem Verschlussring und werden nicht weggeschleudert.

Der Verschlussring 60 wird an der Fußarmatur 50 in unmittelbarer Nähe der Öffnung 58 abgefangen, nämlich im unteren Bereich des Kabel-Einführzylinders 56. Dort schlägt der Verschlussring 60 auf den oberen Teil des Hochspannungskabels, beispielsweise auf eine Kabelschelle oder auf einem dort befestigten Abfangring. Der Verschlussring 60 bleibt dort hängen. Er kann nicht unkontrolliert wegfliegen und stellt keine Gefahr dar.

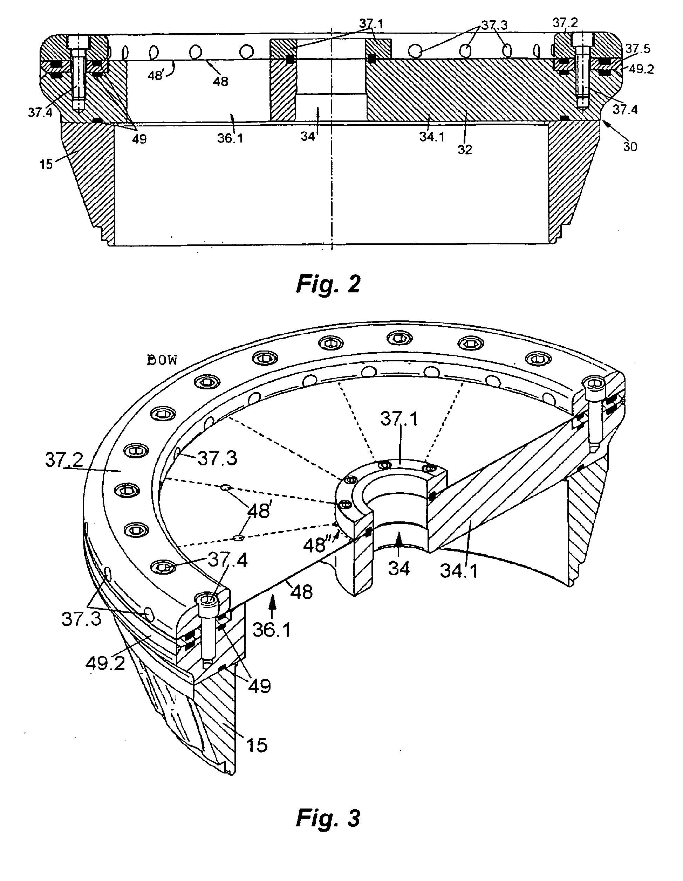

Die Figuren 2 und 3 zeigen die Kopfarmatur des Endverschlusses in zwei verschiedenen Ansichten. Das Verschlussmittel der ringsegmentförmigen Druckentlastungsöffnung 36.1 in der Kopfplatte 32 ist als Berstscheibe 48 ausgebildet. Die Kopfplatte kann aus Aluminium bestehen. Die Berstscheibe ist aus Metall, vorzugsweise aus Edelstahl, und hat eine einheitliche Dicke (beispielsweise von 2,5 mm), wobei in der Scheibe 48 linienförmige Bereiche 48', 48" geringerer Dicke ausgebildet sind. Die Bereiche 48' und 48" umranden etwa dreieckige, lappenartige Flächenelemente.

Die Berstscheibe 48 ist von außen auf die Druckentlastungsöffnungen in der Kopfarmatur aufgesetzt. Die Scheibe 48 ist ringförmig und ist mit einer inneren kreisförmigen Öffnung ausgebildet, die der Öffnung für die Leiterdurchführung 34 entspricht. Am Innenrand und am Außenrand sind Befestigungslöcher vorhanden. Die Berstscheibe ist mit zwei Ringen 37.1, 37.2 auf der Kopfarmatur befestigt. Als Befestigungsmittel für die Scheibe 48 dienen Befestigungsschrauben 37.4, die durch Bohrungen in den Befestigungsringen greifen. Die Bohrungen sind passend zu den Befestigungslöchern der Scheibe 48 vorgegeben. Die ringförmigen Elemente mit den Bezugszeichen 37.1, 37.2 und 37,5 bestehen aus Edelstahl, wie die Berstscheibe. Damit steht die Berstscheibe allein mit Werkstücken derselben chemischen Eigenschaft in Berührung, wodurch Korrosion ausgeschlossen wird. Die Werkstücke sind untereinander mit O-Ringen 49 gedichtet. Als äußere Abdichtung kann ein Silikonring 49.2 vorhanden sein.

### Bezugszeichen (auch zur Ergänzung der Figurenbeschreibung)

- 10: Stützer-Endverschluß
- 12: Isoliergehäuse (rotationssymm. Hohlkörper)
- 14: Isolierrippen
- 15: Stützring Metall (an Kopfplatte)
- 16: Stützring Metall (an Fußplatte)
- 30: Kopfarmatur
- 32: Kopfplatte (Zweite Platte)
- 34: Leiterdurchführung an Kopfplatte
- 34.1: Stege
- 36.1: ringsegmentförmige Druckentlastungsöffnung in Kopfarmatur
- 37.1: Befestigungsring klein
- 37.2: Befestigungsring groß
- 37.3: Drainagebohrungen
- 37.4: Befestigungsschraube(n)
- 37.5: Zwischenring
- 48: Berstscheibe
- 48' 48": Schwächungslinie
- 49: O-Ringe
- 49.2: Silikondichtung
- 50: Fußarmatur
- 52: Fußplatte (erste Platte)
- 55: Kabeleinführöffnung
- 56: Kabel-Einführzylinder
- 58: ringsegmentförmige Druckentlastungsöffnung in Fußarmatur
- 59: Steg
- 60: Ring als Verschlussmittel
- 62: O-Ringe
- 64: Abreißschraube(n)
- 70: verschlossener (abgewinkelter) Belüftungs- bzw. Füllkanal

## Patentansprüche

1. Auf einer Unterlage angeordneter Kabelendverschluss für Freiluft- oder Innenraumanwendung, umfassend mindestens
• eine Fußarmatur (50, 52) zur Aufständerung auf der Unterlage,
• ein Isoliergehäuse (12) zur Aufnahme eines fluiden Isolationsmediums, und
• eine Kopfarmatur (30, 32) mit Mitteln zur Ankopplung an ein Leiterseil,
wobei an dem Kabelendverschluss (10) mindestens eine verschließbare Druckentlastungsöffnung (36.1, 58) für das Isolationsmedium ausgebildet ist, die ein Öffnen bei Überschreiten eines vorbestimmbaren Innendrucks gestattet,
wobei die Druckentlastungsöffnungen (36.1, 58) verschließende Verschlussmittel (48, 60) vorhanden sind, die derart ausgebildet sind, dass bei Überschreiten eines vorbestimmbaren Innendrucks sich keine Teile des Kabelendverschlusses (10) unkontrolliert ablösen,
**dadurch gekennzeichnet, dass**
• mindestens eine Druckentlastungsöffnung (36.1, 58) in einer ersten Platte (52) in der Fußarmatur (50) und/oder in einer zweiten Platte (32) in der Kopfarmatur (30) ausgebildet ist, wobei die Platten (52, 32) von der mindestens einen Druckentlastungsöffnung (36.1, 58) großflächig durchbrochen sind.

2. Kabelendverschluss nach Anspruch 1, **dadurch gekennzeichnet, dass** die mindestens eine Druckentlastungsöffnung (32.1, 58) als ringsegmentförmige Öffnung konzentrisch um eine in der ersten Platte (52) vorhandene Kabel-Einführöffnung (55), bzw. als ringsegmentförmige Öffnung konzentrisch um eine in der zweiten Platte (32) vorhandene Leiterdurchführung (34) ausgebildet ist und mit mindestens zwei Stegen (34.1, 59) zwischen innerhalb der ringförmigen Öffnungen (34, 55) und außerhalb der ringförmigen Öffnungen (34, 55) liegendem Material der jeweiligen Platte (32, 52) überbrückt ist.

3. Kabelendverschluss nach Anspruch 1 oder 2, **dadurch gekennzeichnet, dass** das Verschlussmittel einer der ringsegmentförmigen Öffnungen (58) als Ring (60) ausgebildet ist und der Ring (60) mit mindestens einer Abreißschraube (64) an einer der Platten (52) befestigt ist.

4. Kabelendverschluss nach Anspruch 1 oder 2, **dadurch gekennzeichnet, dass** das Verschlussmittel einer der ringsegmentförmigen Öffnungen (58) in einer der Platten als Berstscheibe (48) ausgebildet ist.

5. Kabelendverschluss nach Anspruch 4, **dadurch gekennzeichnet, dass** die Berstscheibe als Ringscheibe (48) ausgebildet ist und dass am Innenrand und am Außenrand Befestigungslöcher vorhanden sind.

6. Kabelendverschluss nach Anspruch 4 oder 5, **dadurch gekennzeichnet, dass** die Berstscheibe (48) aus Edelstahl besteht und in ihr Bereiche (48',48") geringerer Dicke linienförmig ausgebildet sind.

7. Kabelendverschluss nach Anspruch 6, **dadurch gekennzeichnet, dass** die linienförmig ausgebildeten Bereiche (48',48") geringerer Dicke mindestens eine lappenartige Fläche umranden.

8. Kabelendverschluss nach einem der Ansprüche 4 bis 7, **dadurch gekennzeichnet, dass** als Befestigungsmittel für die Berstscheibe (48) ein Innenring (37.1) und ein Außenring (37.2) je mit Bohrungen passend zu den Befestigungslöchern der Berstscheibe (48) eingesetzt sind.

9. Kabelendverschluss nach Anspruch 8, **dadurch gekennzeichnet, dass** im Außenring (37.2) Drainagebohrungen (37.3) ausgebildet sind.

## Claims

1. Cable end closure which is arranged on a substrate for use in the open air or in an indoor space, comprising at least
- a lower armature (50, 52) for mounting on the substrate,
- an insulating housing (12) for receiving a fluid insulation medium, and
- an upper armature (30, 32) having means for coupling to a conductor cable,
there being constructed on the cable end closure (10) at least one closable pressure relief opening (36.1, 58) for the insulation medium, which permits opening when a predeterminable internal pressure is exceeded,
there being provided closure means (48, 60) which close the pressure relief openings (36.1, 58) and which are constructed in such a manner that, when a predeterminable internal pressure is exceeded, no portions of the cable end closure (10) become released in an uncontrolled manner,
**characterised in that**
at least one pressure relief opening (36.1, 58) is formed in a first plate (52) in the lower armature (50) and/or in a second plate (32) in the upper armature (30), the at least one pressure relief opening (36.1, 58) extending through the plates (52, 32) over a large surface-area.

2. Cable end closure according to claim 1, **characterised in that** the at least one pressure relief opening (32.1, 58) is constructed as a ring-segment-like opening concentrically around a cable introduction opening (55) which is provided in the first plate (52) or as a ring-segment-like opening concentrically around a conductor passage (34) provided in the second plate (32), and is bridged by means of at least two webs (34.1, 59) between material of the respective plate (32, 52) located inside the annular openings (34, 55) and outside the annular openings (34, 55).

3. Cable end closure according to claim 1 or claim 2, **characterised in that** the closure means of one of the ring-segment-like openings (58) is constructed as a ring (60) and the ring (60) is secured to one of the plates (52) by means of at least one tear-off screw (64).

4. Cable end closure according to claim 1 or claim 2, **characterised in that** the closure means of one of the ring-segment-like openings (58) in one of the plates is constructed as a rupture disc (48).

5. Cable end closure according to claim 4, **characterised in that** the rupture disc is constructed as an annular disc (48) and **in that** securing holes are provided at the inner edge and at the outer edge.

6. Cable end closure according to claim 4 or claim 5, **characterised in that** the rupture disc (48) comprises high-grade steel and regions (48', 48") of smaller thickness are constructed therein in a linear manner.

7. Cable end closure according to claim 6, **characterised in that** the linear regions (48', 48") of smaller thickness surround at least one tab-like surface.

8. Cable end closure according to any one of claims 4 to 7, **characterised in that** an inner ring (37.1) and an outer ring (37.2) each having holes corresponding to the securing holes of the rupture disc (48) are used as securing means for the rupture disc (48).

9. Cable end closure according to claim 8, **characterised in that** drainage holes (37.3) are formed in the outer ring (37.2).

## Revendications

1. Boîte d'extrémité de câble pour une utilisation en plein air ou en intérieur placée sur une base, comprenant au moins
- une armature de pied (50, 52) permettant le montage vertical sur la base,
- un boîtier isolant (12) destiné à recevoir un milieu isolant fluide et
- une armature de tête (30, 32) pourvue de moyens pour le couplage avec un conducteur,
la boîte d'extrémité de câble (10) étant pourvue d'au moins une ouverture de décharge de pression (36.1, 58) pouvant être fermée pour le milieu isolant, qui permet une ouverture en cas de dépassement d'une pression intérieure pouvant être prédéterminée,
des moyens de fermeture (48, 60) fermant les ouvertures de décharge de pression (36.1, 58) étant présents, lesquels moyens sont exécutés de manière à ce qu'aucune des parties de la boîte d'extrémité de câble (10) ne se détache de manière incontrôlée en cas de dépassement d'une pression intérieure pouvant être prédéterminée,
**caractérisée par le fait**
**qu'**au moins une ouverture de décharge de pression (36.1, 58) est formée dans une première plaque (52) dans l'armature de pied (50) et/ou dans une seconde plaque (32) dans l'armature de tête (30), une grande surface des plaques (52, 32) étant percée par l'au moins une ouverture de décharge de pression (36.1, 58).

2. Boîte d'extrémité de câble selon la revendication 1, **caractérisée par le fait que** l'au moins une ouverture de décharge de pression (36.1, 58) est réalisée en tant qu'ouverture en forme de segment de couronne entourant de manière concentrique une ouverture d'introduction de câble (55) présente dans la première plaque (52) resp. en tant qu'ouverture en forme de segment de couronne entourant de manière concentrique une traversée de conducteur (34) présente dans la seconde plaque (32) et est traversée par au moins deux âmes (34.1, 59) entre du matériau de la plaque respective (32, 52) situé à l'intérieur des ouvertures en forme de couronne (34, 55) et à l'extérieur des ouvertures en forme de couronne (34, 55).

3. Boîte d'extrémité de câble selon la revendication 1 ou 2, **caractérisée par le fait que** le moyen de fermeture d'une des ouvertures en forme de segment de couronne (58) est exécuté en tant que couronne (60) et la couronne (60) est fixée sur une des plaques (52) à l'aide d'au moins une vis frangible (64).

4. Boîte d'extrémité de câble selon la revendication 1 ou 2, **caractérisée par le fait que** le moyen de fermeture d'une des ouvertures en forme de segment de couronne (58) est exécuté en tant que disque de rupture (48) dans l'une des plaques.

5. Boîte d'extrémité de câble selon la revendication 4, **caractérisée par le fait que** le disque de rupture est exécuté en tant que disque annulaire (48) et que des trous de fixation sont présents sur le bord intérieur et sur le bord extérieur.

6. Boîte d'extrémité de câble selon la revendication 4 ou 5, **caractérisée par le fait que** le disque de rupture (48) est en acier spécial et il comporte des zones (48', 48") de moindre épaisseur formant des lignes.

7. Boîte d'extrémité de câble selon la revendication 6, **caractérisée par le fait que** les zones (48', 48") de moindre épaisseur formant des lignes bordent au moins une surface similaire à une languette.

8. Boîte d'extrémité de câble selon l'une des revendications 4 à 7, **caractérisée par le fait qu'**une bague intérieure (37.1) et une bague extérieure (37.2) pourvues à chaque fois d'alésages correspondant aux trous de fixation du disque de rupture (48) sont utilisées en tant que moyens de fixation pour le disque de rupture (48).

9. Boîte d'extrémité de câble selon la revendication 8, **caractérisée par le fait que** des alésages de drainage (37.3) sont formés dans la bague extérieure (37.2).
